# EUROPEAN PATENT APPLICATION

(11) **EP 4 364 621 A2**
(43) Date of publication of application: **08.05.2024**
(21) Application number: 24164861.7
(22) Date of filing: 03.05.2021
(51) Int. Cl.: A47J 43/07

(54) **MIXER ASSEMBLY**

(30) Priority: 05.05.2020 US 202016867233
(62) Divisional of application: 21171908.3
(71) Applicant: Whirlpool Corporation, Benton Harbor, MI 49022 (US)
(72) Inventor: Ebstein, Ryan Nelson, Benton Harbor, MI 49022 (US)
(74) Representative: PGA S.p.A., Milano, Succursale di Lugano

(57) **Abstract**

A mixer assembly (10) comprises a body (12) and a shield (18). The body (12) has a pedestal (14) and a mixer head (16). The shield (18) is operably coupled to the mixer head (16). The shield (18) comprises a stationary attachment portion (20), a rotational inner ring (22) operably coupled to the stationary attachment portion (20) and a gasket (24) coupled to the rotational inner ring (22). The rotational inner ring (22) is disposed between the gasket (24) and the stationary attachment portion (20). The mixer assembly (10) comprises a heated base (26) operably coupled to the pedestal (14) and configured to receive a mixing bowl (28). The mixer assembly (10) comprises a locking member (30) coupled to the heated base (26). The locking member (30) is operable between a locked position (32) and an unlocked position (34), removal of the mixing bowl (28) from the heated base (26) being prevented in the locked position (32) of the locking member (30).

## Description

### BACKGROUND OF THE DISCLOSURE

The present disclosure generally relates to an appliance, and more specifically, to a mixer assembly for an appliance. Document EP3090669A1 discloses a pouring shield for a stand mixer which includes a mixer head and is configured to receive a mixing bowl with an open top.

### SUMMARY OF THE DISCLOSURE

According to one aspect of the present disclosure, a mixer assembly includes a body that has a pedestal and a mixer head. A shield is operably coupled to the mixer head. The shield includes a stationary attachment portion, a rotational inner ring that is coupled to the stationary attachment portion, and a gasket that is coupled to the rotational inner ring. The rotational inner ring is disposed between the gasket and the stationary attachment portion. A heated base is operably coupled to the pedestal and is configured to receive a mixing bowl. A locking member is coupled to the heated base and is operable between a locked position and an unlocked position.

According to another aspect of the present disclosure, an appliance includes a mixing body that has a pedestal and a mixer head. A shield is operably coupled to the mixer head. A heated base is operably coupled to the pedestal and is configured to receive a mixing bowl. The heated base includes an outer housing that has an insulated platform, a thermal capacitor that is operably coupled with the outer housing, a heater that is coupled to the thermal capacitor and is disposed between the thermal capacitor and the insulated platform within the outer housing, and a locking member that is operably coupled to the heated base between a locked position and an unlocked position.

According to yet another aspect of the present disclosure, a heated base for a mixing assembly includes a housing that has an upper rim and a lower bowl. A heating feature is disposed within the lower bowl of the housing. An engagement clip is operably coupled to the housing. A locking member operably coupled to the engagement clip. The locking member is configured to selectively engage the engagement clip in a first position and a second position.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a side elevational view of a mixer assembly of the present disclosure in a raised position;
FIG. 2 is a side elevational view of a mixing bowl of the present disclosure that has a ridge extending outwardly from a lower portion of the mixing bowl;
FIG. 3 is a top perspective view of a shield for a mixing assembly of the present disclosure;
FIG. 4 is a bottom perspective view of the shield of FIG. 3;
FIG. 5 is a side elevational cross-sectional view of the shield of FIG. 3 with a mixer head of the present disclosure in phantom;
FIG. 6 is a side elevational view of a mixer assembly of the present disclosure with a mixing tool;
FIG. 7 is a top perspective view of the mixing tool of FIG. 6 that has a first arm and a second arm;
FIG. 8 is a side elevational view of the mixing tool of FIG. 6 illustrating the first arm at the first angle;
FIG. 9 is a top perspective exploded view of a heated base of the present disclosure;
FIG. 10 is a top perspective view of a heated base of the present disclosure;
FIG. 11 is a cross-sectional view of the heated base of FIG. 10 taken along lines XI-XI illustrating a heating feature that includes induction coils;
FIG. 12 is a cross-sectional view of the heated base of FIG. 10 taken along lines XII-XII illustrating a heater and a thermal capacitor;
FIG. 13 is an enlarged cross-sectional view of a portion of the heated base of FIG. 12 taken along line XIII-XIII illustrating an engagement clip in a locked position; and
FIG. 14 is an enlarged cross-sectional view of the heated base of FIG. 12 taken along line XIV-XIV illustrating an engagement clip in an unlocked position.

The components in the figures are not necessarily to scale, emphasis instead being placed upon illustrating the principles described herein.

### DETAILED DESCRIPTION

The present illustrated embodiments reside primarily in combinations of apparatus components related to a mixer assembly. Accordingly, the apparatus components have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

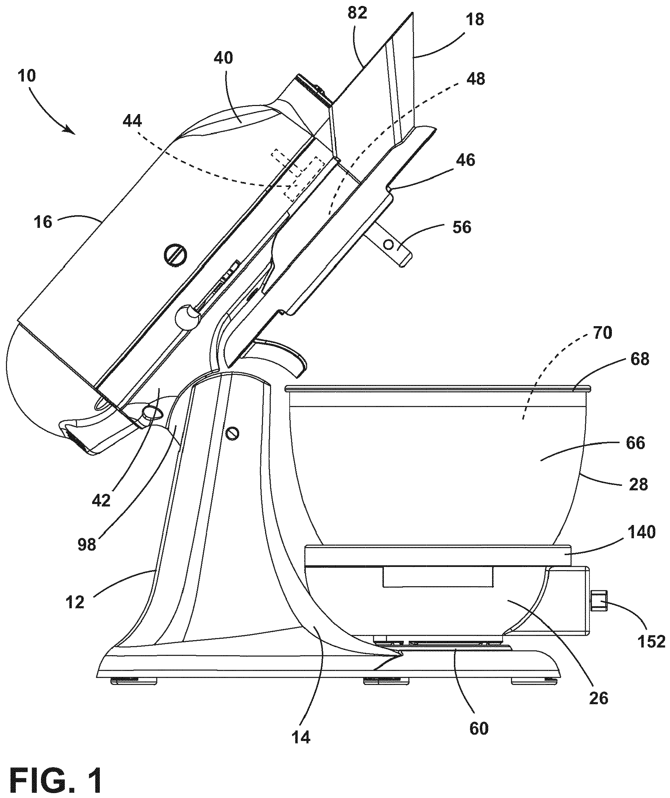

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ... " does not, without more constraints, preclude the existence of additional identical elements in the process, method, article, or apparatus that comprises the element.

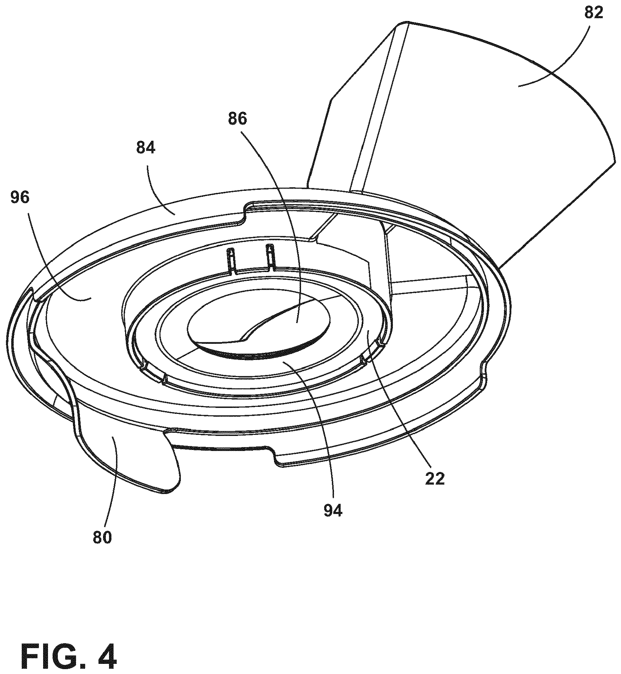

Referring to the configuration set forth in FIGS. 1-14, reference numeral 10 generally designates a mixer assembly that includes a body 12 having a pedestal 14 and a mixer head 16. A shield 18 is operably coupled to the mixer head 16. The shield 18 includes a stationary attachment portion 20, a rotational inner ring 22 that is operably coupled to the stationary attachment portion 20, and a gasket 24. The gasket 24 is coupled to the rotational inner ring 22, such that the rotational inner ring 22 is disposed between the gasket 24 and the stationary attachment portion 20. A heated base 26 is operably coupled to the pedestal 14 and is configured to receive a mixing bowl 28. In addition, a locking member 30 is coupled to the heated base 26 and is operable between a locked position 32 and an unlocked position 34. It is generally contemplated that the locked position 32 may be referred to as a first position and the unlocked position 34 may be referred to as a second position.

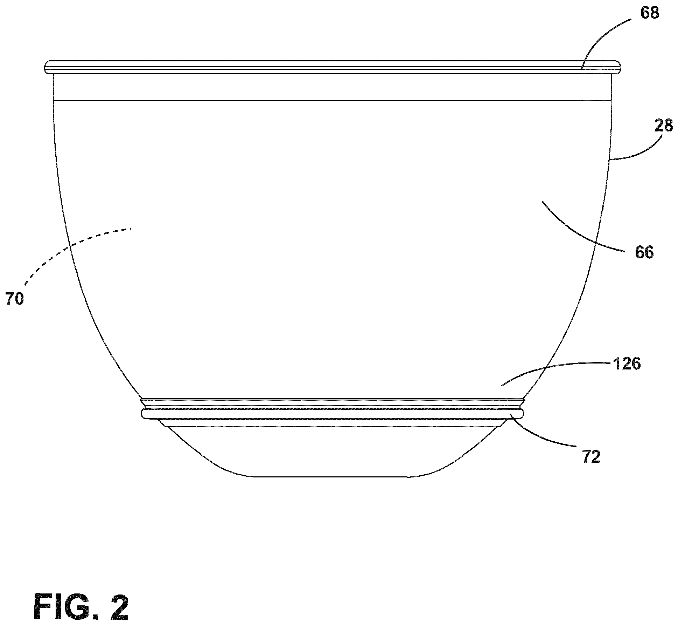

Referring now to FIGS. 1-3, the mixer assembly 10 is illustrated as a stand mixer with the mixer head 16 having an attachment end 40 and a pivot end 42. It is generally contemplated that a drive system 44 is disposed within the mixer head 16 and is configured to engage and operate an attachment feature 46 of the mixer head 16. The attachment feature 46 is coupled to the gasket 24 of the shield 18 to define a seal 48 to minimize potential fluid contact with the drive system 44, as described in greater detail below with regard to FIGS. 2-5. In addition, the attachment feature 46 of the mixer head 16 is operably coupled to the rotational inner ring 22 of the shield 18. The drive system 44 generally operate the attachment feature 46 in a rotational, planetary movement, as well as adjusting the height and position of the attachment feature 46, as will be discussed below. The rotational, planetary movement of the attachment feature 46 is translated to the rotational inner ring 22 to which the attachment feature 46 is coupled, such that there is a simultaneous rotation of the rotational inner ring 22, the attachment feature 46, and the gasket 24 by the drive system 44.

The attachment feature 46 of the mixer head 16 is configured to be adjusted in a generally upward and downward direction by the drive system 44. The drive system 44 also rotate the attachment feature 46, the speed of which is controlled by a speed adjuster 52, described below, disposed on a side of the mixer head 16. The attachment feature 46 includes a rotatable disk 54 and a post 56 that extends from the rotatable disk 54, such that a mixing tool 58, described below, can attach to the attachment feature 46. It is generally contemplated that the mixing tool 58 may attach to the post 56 or may attach proximate to the post 56 to the rotatable disk 54 directly. As mentioned above, the mixer head 16 also includes the speed adjuster 52 disposed along a side of the mixer head 16. However, it is contemplated that the speed adjuster 52 may be positioned in any practical location along the mixer head 16. The speed adjuster 52 generally varies and adjusts the speed of the mixing tool 58, which is coupled to the attachment feature 46 and discussed in further detail below.

With further reference to FIG. 1, the mixer head 16 is pivotably coupled to the pedestal 14 at the pivot end 42 of the mixer head 16. The pedestal 14 includes an engagement portion 60 to which the heated base 26 is operably coupled. The engagement portion 60 may include a threaded engagement, such that the heated base 26 may be threadably engaged and disposed within the engagement portion 60 of the pedestal 14 to couple the heated base 26 to the body 12 of the mixer assembly 10. By way of example, not limitation, the heated base 26 may be twisted or rotated onto the engagement portion 60 until a user receives tactile feedback that the heated base 26 is securely attached to the pedestal 14. Additionally or alternatively, the engagement portion 60 and the heated base 26 may be operably coupled by any practical coupling method known in the art, such as via magnetic attachment.

As illustrated in FIGS. 1 and 2, the mixing bowl 28 is disposed within and operably coupled to the heated base 26, described in further detail below. The mixing bowl 28 includes a shell 66 that extends to an upper lip 68 to define an inner cavity 70. In addition, a ridge 72 extends outwardly and circumferentially from and around the shell 66 of the mixing bowl 28. Additionally or alternatively, the ridge 72 may be disposed at intervals along the shell 66, such that multiple ridges may outwardly extend from the mixing bowl 28. As will be described in more detail below, the ridge 72 is configured to operably and selectively couple the mixing bowl 28 to the heated base 26. As illustrated in FIG. 1, the shield 18 is configured to selectively couple to the upper lip 68 of the mixing bowl 28 to generally cover the inner cavity 70 of the mixing bowl 28. Thus, as ingredients are mixed within the inner cavity 70, it is generally contemplated that the shield 18 minimizes potential splatter or other fluid, such as steam, from exiting the mixing bowl 28.

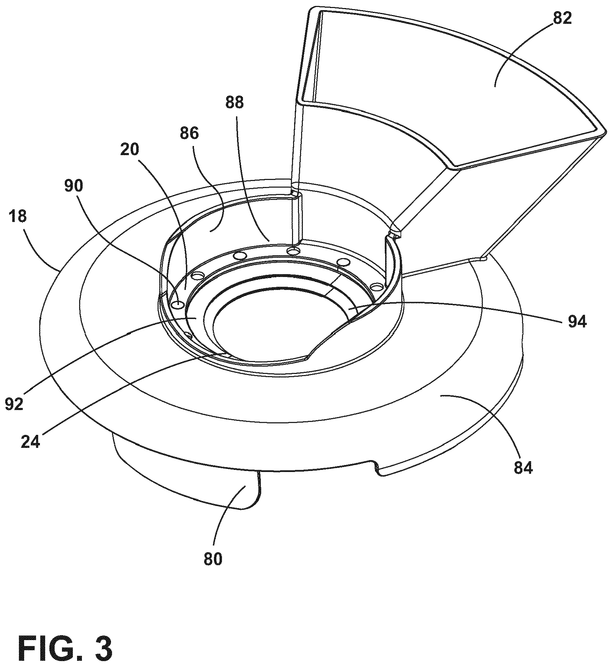

Referring now to FIGS. 3-5, the shield 18 includes the stationary attachment portion 20, the rotational inner ring 22, and the gasket 24, as mentioned above. The shield 18 also includes a drip guard 80 and an ingredient inlet 82 upwardly extending from the shield 18. As illustrated in FIG. 3, the ingredient inlet 82 has a generally funnel shape to direct the ingredients into the mixing bowl 28. In addition, the wide opening of the ingredient inlet 82 allows for a dissipation of steam that may occur as a result of the heated contents within the mixing bowl 28. The wide opening minimizes the concentration of the steam that may exit the ingredient inlet 82. The drip guard 80, described below, generally extends between the pivot end 42 of the mixer head 16 and the pedestal 14. The drip guard 80 is disposed within the mixing bowl 28 (FIG. 1) when the shield 18 is coupled to the mixing bowl 28 (FIG. 1), and as best illustrated in FIG. 1, the drip guard 80 extends toward the mixing bowl 28 proximate to the body 12 of the mixer assembly 10, as described further below.

As illustrated in FIG. 3, the shield 18 includes a collar 84 and a flange 86 upwardly extending from the collar 84 to define a receiving opening 88 of the shield 18 in which the attachment end 40 of the mixer head 16 is disposed. The stationary attachment portion 20 of the shield 18 is positioned within the receiving opening 88 and magnetic fasteners 90 are disposed along a circumference of the stationary attachment portion 20, such that the magnetic fasteners 90 are configured to couple to the attachment end 40 of the mixer head 16 as the mixer head 16 is typically formed from a metal material.

The gasket 24 is adjacent to the stationary attachment portion 20 and includes an upper gasket portion 92 and a lower gasket portion 94. The upper gasket portion 92 and the lower gasket portion 94 define a stepped arrangement, best illustrated in FIG. 3, of the gasket 24, such that the upper gasket portion 92 is proximate to the stationary attachment portion 20 and the lower gasket portion 94 is adjacent to the rotational inner ring 22. It is generally contemplated that the rotational inner ring 22 is disposed between the gasket 24 and the stationary attachment portion 20, such that the gasket 24 is interior to the rotational inner ring 22 of the shield 18.

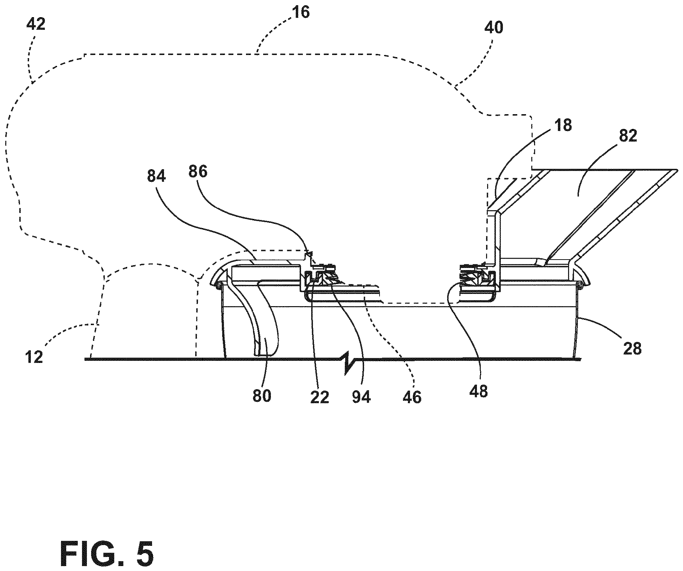

With further reference to FIG. 5 and as mentioned above, the gasket 24 defines the seal 48 between the attachment feature 46 of the attachment end 40 of the mixer head 16 and the shield 18. The seal 48 minimizes the potential for fluid, such as steam, to come into contact with the drive system 44 (FIG. 1) of the mixer head 16. Adjacent to the seal 48, the rotational inner ring 22 is rotatably coupled to the attachment feature 46 of the mixer head 16 via the gasket 24 to maintain the seal 48 defined between the gasket 24 and the attachment feature 46 of the mixer head 16. To minimize fluid contact, as mentioned above, the gasket 24 rotates in conjunction with the attachment feature 46 and the rotational inner ring 22 to minimize potential faltering of the seal 48. The rotational inner ring 22 along with the attachment feature 46 are configured to rotate in a planetary fashion, such that the mixing tool 58 may rotate within the mixing bowl 28. Potential steam that may be present within the mixing bowl 28 as a result of heated contents can generally be contained by the shield 18. Specifically, the addition of the rotational inner ring 22 and the gasket 24 separate, via the seal 48, the attachment end 40 of the mixer head 16 from the heated contents and potential steam that may result.

Referring still to FIGS. 3-5, condensation may generally form along an interior surface 96 of the shield 18, such that when the pivot end 42 of the mixer head 16 is pivoted relative to the body 12, the drip guard 80 of the shield 18 minimizes potential contact of condensation accumulated on the interior surface 96 with a hinge 98, which couples the pivot end 42 of the mixer head 16 to the pedestal 14. The drip guard 80 is generally arcuate in shape, such that the drip guard 80 generally follows the curvilinear structure between the mixer head 16 and the pedestal 14 and generally acts as an extension of the shell 66 of the mixing bowl 28. As mentioned above, the shield 18 is generally disposed along the upper lip 68 of the mixing bowl 28, which is positioned within the heated base 26, discussed in further detail below. The position of the shield 18 proximate to the upper lip 68 of the mixing bowl 28 minimizes steam contact with the hinge 98 despite the position of the mixer head 16. For example, the mixer head 16 may be pivoted in order to access the mixing tool 58 and/or the heated contents within the mixing bowl 28, as illustrated in FIG. 1. In such configuration, the drip guard 80 is disposed to direct the potential condensation along the interior surface 96 of the shield toward the mixing bowl 28 rather than the hinge 98.

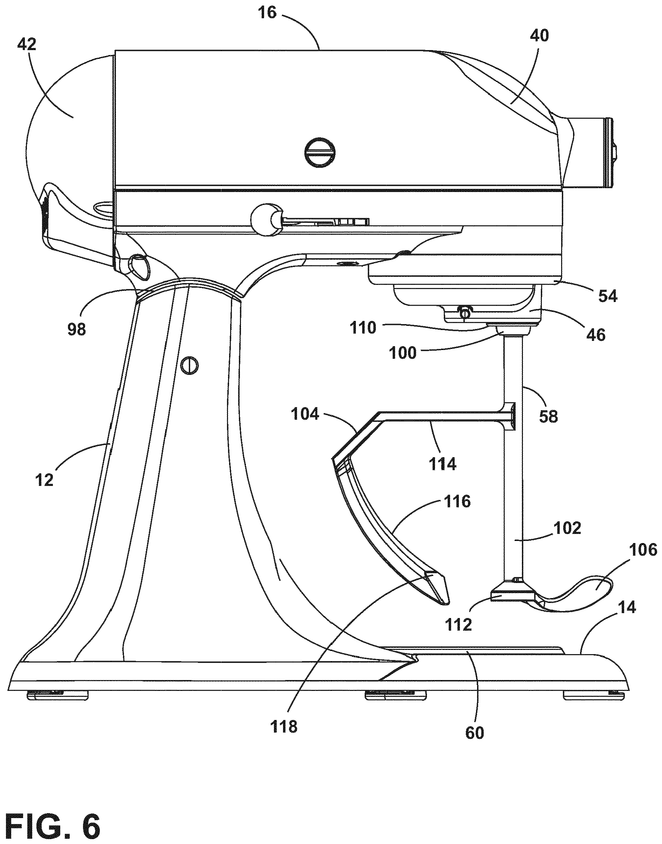

Referring now to FIGS. 6-8, the mixing tool 58 is coupled to the attachment feature 46 of the mixer head 16. The mixing tool 58 includes a retention end 100, a shaft 102, a first arm 104, and a second arm 106. The mixing tool 58 is operably coupled to the attachment feature 46 via the retention end 100, such that the retention end 100 may include a friction fit, mechanical fasteners, or other coupling structures known in the art. By way of example, not limitation, the retention end 100 can be configured to operably couple to the post 56 to define a counter-shaft motion when the rotatable disk 54 is in operation, described in more detail below. The retention end 100 includes a recessed portion 108 and a flange 110 outwardly extending from the recessed portion 108 of the retention end 100. By way of example, not limitation, the post 56 (FIG. 1) of the attachment feature 46 can be received within the recessed portion 108 of the retention end 100 of the mixing tool 58.

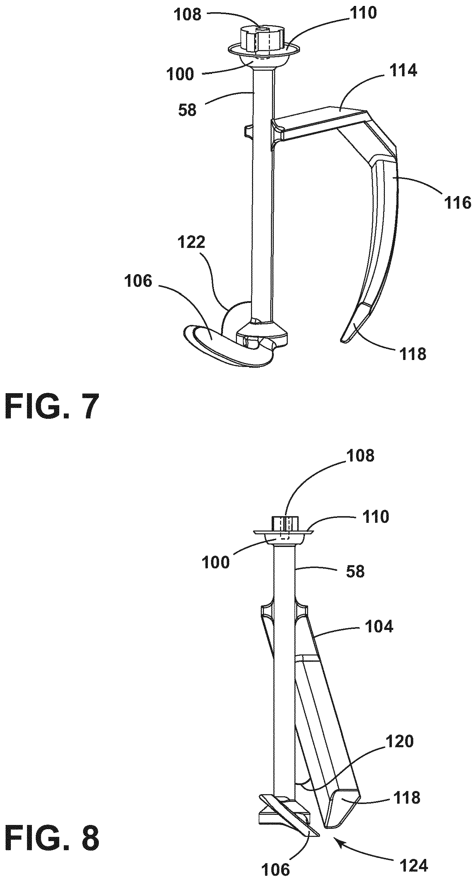

With reference now to FIGS. 7 and 8, the shaft 102 extends from the retention end 100 and includes a terminal end 112. The first arm 104 of the mixing tool 58 outwardly extends from the shaft 102, and the second arm 106 of the mixing tool 58 outwardly extends from the terminal end 112 of the shaft 102. The first arm 104 includes a crossbar 114 and a flipping portion 116 that has a tip 118, which leads the crossbar 114 relative to the shaft 102. Stated differently, the first arm 104 extends outward and downward at a first angle 120 relative to the shaft 102. Comparatively, the second arm 106 extends outward and upward from the shaft 102 at an opposing second angle 122 relative to the first angle 120 of the first arm 104. The first angle 120 and the opposing second angle 122 define a mixing arrangement 124 that maintains the ingredients within a lower portion 126 (FIG. 2) of the mixing bowl 28 (FIG. 2). The first and second angles 120, 122 also promote folding and flipping of the ingredients within the mixing bowl 28 to define a generally uniform mixing pattern of the mixing arrangement 124.

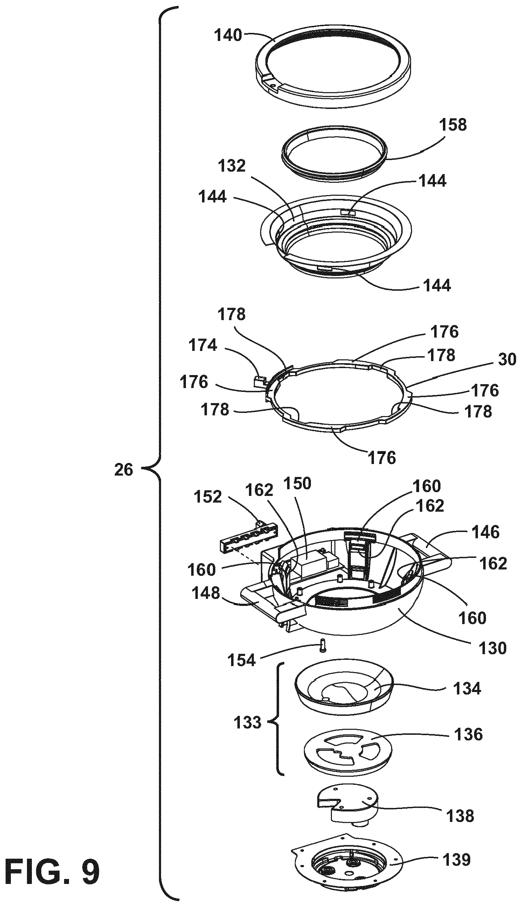

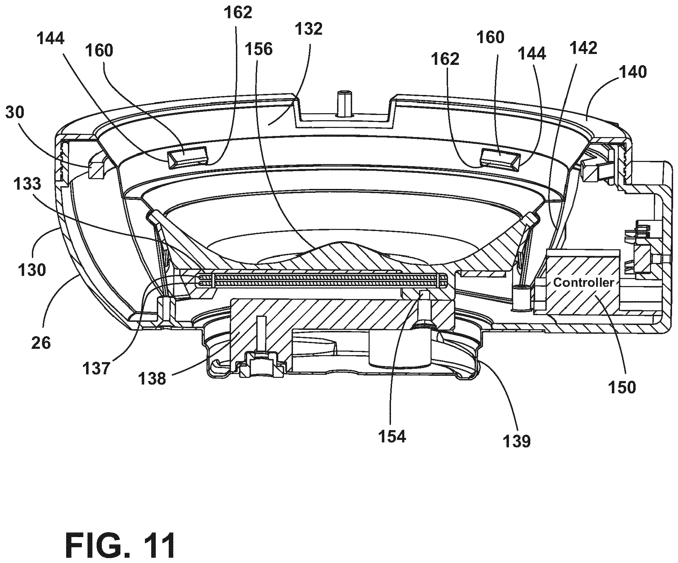

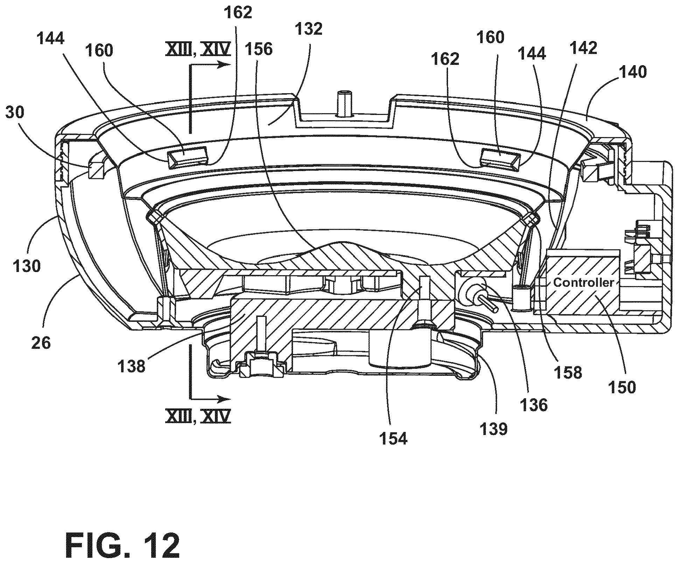

Referring now to FIGS. 9-14, the heated base 26 includes an outer housing 130 and an inner housing 132. A heating feature 133 is disposed between the outer housing 130 and the inner housing 132. As illustrated in FIG. 12, the heating feature 133 includes a thermal capacitor 134 and a heater 136. The heater 136 is disposed within the outer housing 130, and the thermal capacitor 134 is coupled to the inner housing 132, as described in more detail below. Additionally or alternatively, the heating feature 133 may include induction coils 137 (FIG. 11), which are disposed within the outer housing 130 and described below.

As illustrated in FIG. 12, the outer housing 130 includes an insulated platform 138 disposed within a coupling feature 139, an upper rim 140, and a lower bowl 142. By way of example, not limitation, the coupling feature 139 can have a threaded configuration to couple the heated base 26 to the engagement portion 60 (FIG. 6) of the pedestal 14 (FIG. 6). The thermal capacitor 134 is positioned within the lower bowl 142 of the outer housing 130, such that the thermal capacitor 134 is operably coupled with the outer housing 130. As discussed below, the inner housing 132 defines apertures 144 and is coupled to the outer housing 130 to insulate the outer housing 130 from the heater 136 and the thermal capacitor 134.

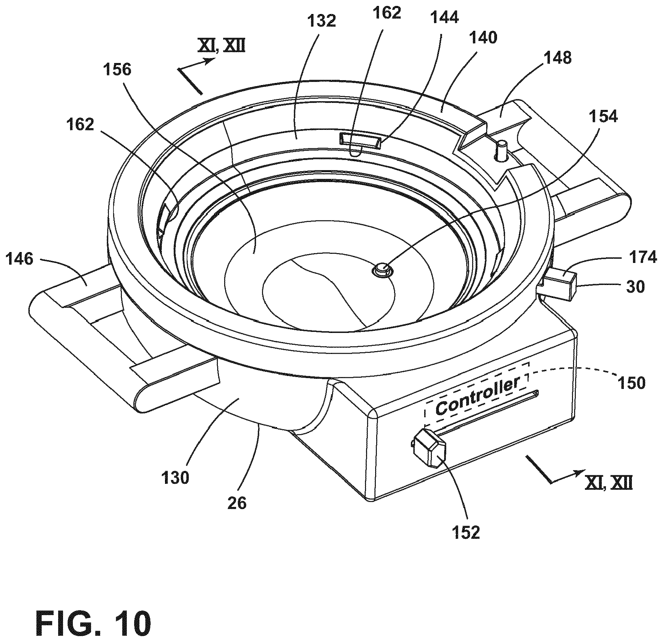

With reference to FIG. 10, the outer housing 130 includes first and second handles 146, 148 that outwardly extend from the upper rim 140 of the outer housing 130. The first and second handles 146, 148 and the outer housing 130 are generally insulated from the heating feature 133, such that despite the operation of the heating feature 133, a user can manipulate the heated base 26 relative to the pedestal 14 (FIG. 6) via the first and second handles 146, 148. As illustrated in FIG. 11, the lower bowl 142 of the outer housing 130 encases the inner housing 132 and the heating feature 133, as described in further detail below. The outer housing 130 also encases a controller 150 that is operably coupled to a temperature control 152 of the heated base 26. The temperature control 152 is illustrated as a sliding knob, which gradually increases and decreases the temperature of the heating feature 133 within the heated base 26. The controller 150 is disposed within the outer housing 130 and is communicatively coupled to a sensor 154.

The sensor 154 extends through a receiving surface 156, which may be defined by the thermal capacitor 134, as depicted in FIG. 12, to detect the temperature of the mixing bowl 28 when the mixing bowl 28 is disposed on the receiving surface 156. The controller 150 adjusts the heating feature 133 to a temperature set by the temperature control 152 when the sensor 154 detects that the mixing bowl 28 has reached the set temperature. It is generally contemplated that the heating feature 133 can include the thermal capacitor 134 to generally regulate the heat from the heater 136, such that the heat is evenly and uniformly displaced across the receiving surface 156 of the thermal capacitor 134. Thus, the heater 136 outputs heat of the heating feature 133 in order to reach the temperature selected by the temperature control 152, and the thermal capacitor 134 regulates the temperature across the receiving surface 156.

Alternatively, as illustrated in FIG. 11, it is also contemplated that the heating feature 133 can include the induction coils 137, such that as the temperature is adjusted the induction coils 137 are activated to induce an electric current within the heated base 26 to generate the heat. In such a configuration, the heated base 26 can be considered to be an induction base, such that the induction coils 137 define a substantially even distribution of heat within the heated base 26 as a result of induction.

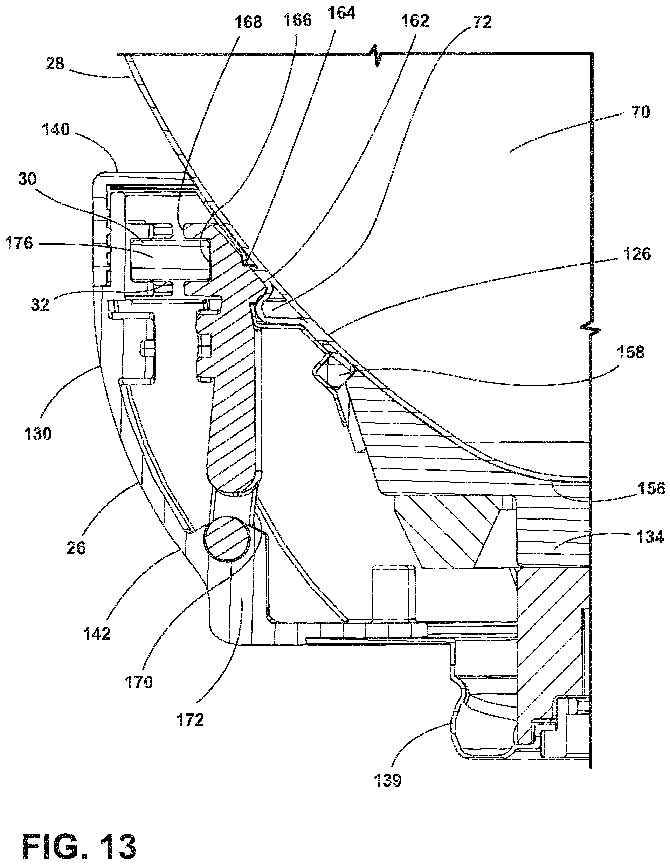

With further reference to FIGS. 9-12, and as mentioned above, the insulated platform 138 of the outer housing 130 insulates the pedestal 14 (FIG. 1) from the heated base 26 and couples the heated base 26 to the pedestal 14 (FIG. 1). In addition, the inner housing 132 provides insulation for the outer housing 130, such that the inner housing 132 forms a barrier between the outer housing 130 and the heated mixing bowl 28 (FIG. 13) disposed on the receiving surface 156 of the thermal capacitor 134. It is generally contemplated that the inner housing 132 itself may be formed from a metal material, such as steel, or other conductive materials known in the art, such that the inner housing 132 may increase in temperature relative to the heated mixing bowl 28 (FIG. 13), while maintaining a barrier between the mixing bowl 28 (FIG. 13) and the outer housing 130. To further define the barrier, the inner housing 132 is coupled to the thermal capacitor 134 via a seal gasket 158, which is disposed around and between the inner housing 132 and the thermal capacitor 134.

With reference to FIGS. 9, 12, and 13, the inner housing 132 also defines the apertures 144, as mentioned above, through which engagement clips 160 of the heated base 26 extend. Although illustrated as multiple engagement clips 160, it is contemplated that a single engagement clip 160 may extend through one of the apertures 144 defined by the inner housing 132. The engagement clips 160 are operably coupled to the outer housing 130 and extend through the apertures 144 of the inner housing 132 to selectively couple the mixing bowl 28 to the heated base 26. Stated differently, a projection 162 of each engagement clip 160 extends through a respective aperture 144 to engage the ridge 72 along the lower portion 126 of the mixing bowl 28. The locking member 30 engages the engagement clip 160 to secure the projection 162 within the respective aperture 144 to prevent the mixing bowl 28 from being removed from the heated base 26 in the first position 32, described further below.

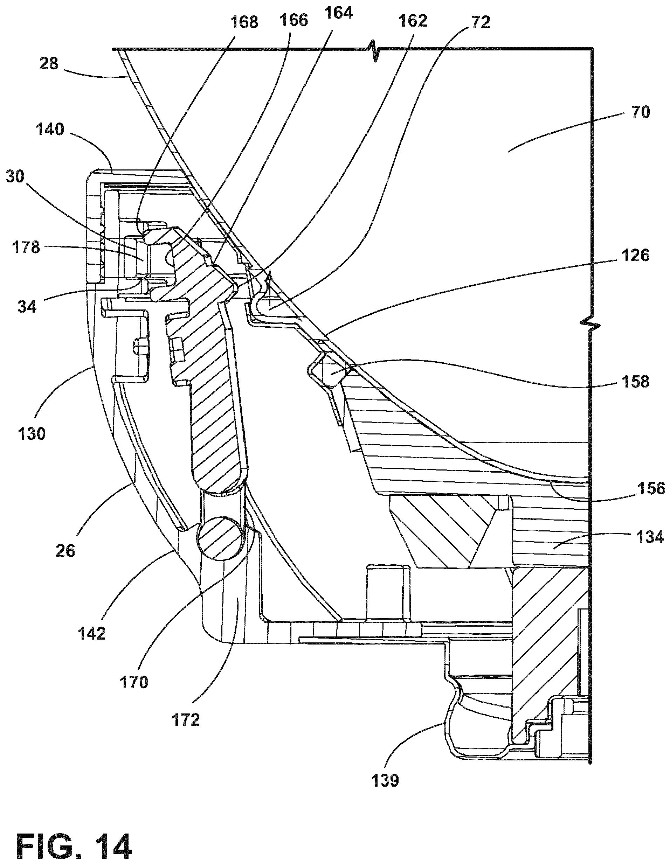

Referring to FIGS. 12-14, the projections 162 define a first side 164 of the engagement clips 160, and a channel 166 is defined on an opposing second side 168 of each engagement clip 160. The projections 162 are generally angular, such that the projections 162 fit between the shell 66 and the ridge 72 of the mixing bowl 28. However, it is contemplated that the projections 162 may have any practical shape to couple the engagement clips 160 to the ridge 72 of the mixing bowl 28. The engagement clips 160 also include a retention feature 170 that is disposed within a receiving member 172 of the outer housing 130, as best illustrated in FIGS. 13 and 14. The retention feature 170 biases the engagement clip 160 within the receiving member 172 relative to the outer housing 130 to selectively couple the engagement clips 160 to the ridge 72 of the mixing bowl 28. The engagement clips 160 are operable between an extended position (FIG. 13) and a retracted position (FIG. 14), such that in the first position 32, the locking member 30 retains the engagement clips 160 in the extended position (FIG. 13) to securely retain the mixing bowl 28 within the heated base 26. In the second position 34, the mixing bowl 28 may be removed from the heated base 26, such that the locking member 30 receives the engagement clips 160 during removal of the mixing bowl 28. Additionally or alternatively, the engagement clips 160 may be biased by the locking member 30, which is positioned between the inner housing 132 and the outer housing 130 proximate to the upper rim 140 of the outer housing 130.

The locking member 30 may be integrally formed with the heated base 26. Alternatively, the locking member 30 may be separately formed and operably coupled to the heated base 26. As best illustrated in FIG. 9, the locking member 30 has an actuator 174 and defines engagement surfaces 176 and recessed surfaces 178 along a circumference of the locking member 30. With reference to FIGS. 12-14 and as mentioned above, the locking member 30 is operably coupled to the engagement clips 160. Specifically, the locking member 30 is disposed within the channels 166 defined by the engagement clips 160 to engage the engagement clips 160 in the first position 32 (FIG. 13) and receive the engagement clips 160 in the second position 34 (FIG. 14).

As mentioned above, it is generally contemplated that the first position 32 can correspond to the locked position and the second position 34 can correspond to the unlocked position of the engagement clips 160. The locked position 32 is defined by the engagement surfaces 176 being disposed within the channels 166 of the engagement clips 160 to maintain the engagement of the engagement clips 160 with the ridge 72 of the mixing bowl 28.

The locking member 30 retains the engagement clips 160 in the biased, locked position 32 to prevent removal of the mixing bowl 28. Comparatively, in the unlocked position 34, the recessed surfaces 178 of the locking member 30 are generally disposed within the channels 166 of the engagement clips 160, such that as the mixing bowl 28 is removed the engagement clips 160 bias into the recessed surfaces 178 to remove the projections 162 from the ridge 72 of the mixing bowl 28. The transition of the locking member 30 is achieved by lateral movement of the actuator 174 relative to the heated base 26, such that the actuator 174 translates the engagement surfaces 176 through the channel 166 of each engagement clip 160 to position the recessed surfaces 178 in the channels 166. Thus, the actuator 174 translates the engagement clips 160, via the locking member 30, through the locked position 32 and the unlocked position 34.

Referring again to FIGS. 1-14, the heated base 26 allows a user to cook while mixing and maintaining the set temperature within the mixing bowl 28. In addition, the combination of the locking member 30 and the ridge 72 defined along the mixing bowl 28 to retain the mixing bowl 28 within the heated base 26 minimizes the potential for tipping or spilling of the heated contents out of the mixing bowl 28. The shield 18 further provides a barrier between the user and the heated contents within the mixing bowl 28 to minimize potential contact with the heated contents.

Additionally, the seal 48 defined between the shield 18 and the attachment end 40 of the mixer head 16 protects the drive system 44 from coming into contact with steam and/or prevents the build-up of condensation near the drive system 44. Thus, the shield 18 is further configured to prevent rusting or other consequential effects of liquid contacting the drive system 44. This is specifically achieved by the seal 48 and the simultaneous rotation of the rotatable disk 54 and the rotational inner ring 22 of the shield 18. The rotational inner ring 22 provides the protective functionality of the shield 18 while allowing the rotatable disk 54 of the mixer head 16 to perform usual mixing functions. Furthermore, the drip guard 80 provides a similar protective functionality as the drip guard 80 is disposed between the mixing bowl 28 and the hinge 98 of the body 12. The drip guard 80 minimizes the potential for condensation build-up to occur in or around the hinge 98 and minimizing potential dripping from the interior surface 96 of the shield 18 from contacting the hinge 98 as it generally covers the hinge 98. Rather, condensation that may build-up on the interior surface 96 of the shield 18 drips down the drip guard 80 and away from the hinge 98.

To further minimize potential exposure to the heated contents, the mixing tool 58 is operably coupled to the rotatable disk 54 proximate to the post 56, mentioned above. The mixing tool 58 is designed to maintain the heated contents within the lower portion 126 of the mixing bowl 28 to minimize potential splatter or other forms of external contact with the heated contents. The first angle 120 and the opposing second angle 122 of the first and second arms 104, 106, respectively, are specifically designed to counteract one another to maintain the heated contents in the lower portion 126 of the mixing bowl 28.

Ultimately, the combination of the heated base 26 to heat and maintain the temperature of the heated contents, the locking member 30 to retain the mixing bowl 28 within the heated base 26, the shield 18 to protect the mixer head 16 and the hinge 98 from steam and condensation exposure, and the mixing tool 58 to maintain the heated ingredients within the lower portion 126 of the mixing bowl 28 work together to maintain the useful life of the mixer assembly 10. Each feature described herein works in combination to achieve a safer and more efficient mixer assembly 10 to extend the useful life of the mixer assembly 10 as a whole.

The disclosure set forth herein is further summarized in the following paragraphs and is further characterized by combinations of any and all of the various aspects described therein.

According to one aspect of the present disclosure, a mixer assembly includes a body that has a pedestal and a mixer head. A shield is operably coupled to the mixer head. The shield includes a stationary attachment portion, a rotational inner ring that is coupled to the stationary attachment portion, and a gasket that is coupled to the rotational inner ring. The rotational inner ring is disposed between the gasket and the stationary attachment portion. A heated base is operably coupled to the pedestal and is configured to receive a mixing bowl. A locking member is coupled to the heated base and is operable between a locked position and an unlocked position.

According to another aspect, a mixer head has a pivot end that is coupled to a pedestal and an attachment end that has an attachment feature. A shield surrounds the attachment end.

According to another aspect, an attachment feature is coupled to a gasket of a shield to define a seal between the attachment feature and the shield. The attachment feature is operably coupled to a rotational inner ring of the shield.

According to another aspect, a mixing tool is operably coupled to an attachment end of a mixer head. The mixing tool includes a retention end that is selectively coupled to the attachment end of the mixer head. A shaft extends from the retention end and has a terminal end. A first arm includes a crossbar and a flipping portion. The flipping portion has a tip that leads the crossbar relative to the shaft. A second arm extends outwardly from the terminal end of the shaft.

According to another aspect, a shield includes a drip guard that is disposed adjacent a pivot end of a mixer head and a pedestal.

According to another aspect, a mixing bowl has a shell and a ridge that extends outwardly from the shell.

According to another aspect, a heated base includes engagement clips that are selectively coupled to a ridge of a mixing bowl. A locking member securely couples the engagement clips to the ridge in a locked position.

According to another aspect of the present disclosure, an appliance includes a mixing body that has a pedestal and a mixer head. A shield is operably coupled to the mixer head. A heated base is operably coupled to the pedestal and is configured to receive a mixing bowl. The heated base includes an outer housing that has an insulated platform, a thermal capacitor that is operably coupled with the outer housing, a heater that is coupled to the thermal capacitor and is disposed between the thermal capacitor and the insulated platform within the outer housing, and a locking member that is operably coupled to the heated base between a locked position and an unlocked position.

According to another aspect, a heated base includes engagement clips selectively coupled to a mixing bowl. A locking member selectively engages the engagement clips in a locked position and an unlocked position.

According to another aspect, a heated base includes an inner housing that defines apertures. Engagement clips extend through the apertures to selectively couple a mixing bowl to the heated base.

According to another aspect, a locking member is disposed between an inner housing and an outer housing and defines recessed surfaces that are configured to receive engagement clips in an unlocked position.

According to another aspect, a shield includes a rotational inner ring that is operably coupled to a mixer head and a drip guard that extends between the mixer head and a pedestal.

According to another aspect, a mixing tool is operably coupled to a mixer head. The mixing tool includes a shaft, a first arm that extends outward and downward at a first angle from the shaft of the mixing tool, and a second arm that extends outward and upward from the shaft in an opposing second angle relative to the first angle of the first arm.

According to another aspect, a shield includes a gasket that is coupled to a mixer head proximate to a mixing tool. The gasket is coupled to a rotational inner ring of the shield to define a seal.

According to yet another aspect of the present disclosure, a heated base for a mixing assembly includes a housing that has an upper rim and a lower bowl. A heating feature is disposed within the lower bowl of the housing. An engagement clip is operably coupled to the housing. A locking member operably coupled to the engagement clip and is configured to selectively engage the engagement clip in a first position and a second position.

According to another aspect, an engagement clip defines a projection on a first side and a channel on an opposing second side. A locking member is disposed within the channel of the engagement clip.

According to another aspect, a locking member defines an engagement surface disposed within a channel of an engagement clip in a first position and a recessed surface that selectively receives the engagement clip in a second position.

According to another aspect, a heating feature includes induction coils that are disposed within a housing. The induction coils define a substantially even temperature pattern within the housing.

According to another aspect, a heater is disposed within a lower bowl of a housing. A thermal capacitor is coupled to the heater and defines a substantially even temperature pattern within the housing.

According to another aspect, a sensor extends through a thermal capacitor and is configured to sense a temperature of a mixing bowl. A controller is communicatively coupled to a sensor and regulate heat within a housing via the thermal capacitor.

## Claims

1. A mixer assembly (10), comprising:
a body (12) having a pedestal (14) and a mixer head (16); and
a shield (18) operably coupled to the mixer head (16).

2. The mixer assembly (10) of claim 1, wherein the shield (18) comprises:
a stationary attachment portion (20);
a rotational inner ring (22) operably coupled to the stationary attachment portion (20); and
a gasket (24) coupled to the rotational inner ring (22), the rotational inner ring (22) being disposed between the gasket (24) and the stationary attachment portion (20).

3. The mixer assembly (10) of claim 2, wherein the mixer head (16) has a pivot end (42) coupled to the pedestal (14) and an attachment end (40) that has an attachment feature (46), and wherein the shield (18) surrounds the attachment end (40).

4. The mixer assembly (10) of claim 3, wherein the attachment feature (46) is coupled to the gasket (24) of the shield (18) to define a seal (48) between the attachment feature (46) and the shield (18), and wherein the attachment feature (46) is operably coupled to the rotational inner ring (22) of the shield (18).

5. The mixer assembly (10) of any one of claims 3 and 4, further comprising a mixing tool (58) operably coupled to the attachment end (40) of the mixer head (16), the mixing tool (58) comprising:
a retention end (100) selectively coupled to the attachment end (40) of the mixer head (16);
a shaft (102) extending from the retention end (100) and having a terminal end (112);
a first arm (104) including a crossbar (114) and a flipping portion (116), the flipping portion (116) having a tip (118) that leads the crossbar (114) relative to the shaft (102); and
a second arm (106) extending outwardly from the terminal end (112) of the shaft (102).

6. The mixer assembly (10) of claim 5, wherein the first arm (104) extends outward and downward at a first angle (120) from the shaft (102) of the mixing tool (58), and wherein the second arm (106) extends outward and upward from the shaft (102) in an opposing second angle (122) relative to the first angle (120) of the first arm (104).

7. The mixer assembly (10) of either of claims 5 and 6, wherein the gasket (24) is coupled to the mixer head (16) proximate to the mixing tool (58), the gasket (24) coupled to the rotational inner ring (22) of the shield (18) to define a seal (48).

8. The mixer assembly (10) of any one of claims 3-7, wherein the shield (18) includes a drip guard (80) disposed adjacent the pivot end (42) of the mixer head (16) and the pedestal (14),
optionally wherein the drip guard (80) extends between the mixer head (16) and the pedestal (14).

9. The mixer assembly (10) of any one of claims 1-8, comprising a heated base (26) operably coupled to the pedestal (14) and configured to receive a mixing bowl (28).

10. The mixer assembly (10) of claim 9, wherein the heated base (26) comprises:
a housing (130) having an upper rim (140) and a lower bowl (142); and
induction coils (137) disposed within the housing (130), wherein the induction coils (137) define a substantially even temperature pattern within the housing (130).

11. The mixer assembly (10) of claim 9 or claim 10, wherein the heated base (26) comprises:
a housing (130) having an upper rim (140) and a lower bowl (142);
a heater (136) disposed within the lower bowl (142) of the housing (130); and
a thermal capacitor (134) coupled to the heater (136) and defining a substantially even temperature pattern within the housing (130).

12. The mixer assembly (10) of any one of claims 9-11, comprising a locking member (30) coupled to the heated base (26) and operable between a locked position (32) and an unlocked position (34).

13. The mixer assembly (10) of claim 12, wherein the mixing bowl (28) has a shell (66) and a ridge (72) extending outwardly from the shell (66), wherein the heated base (26) includes engagement clips (160) selectively coupled to the ridge (72) of the mixing bowl (28), and wherein the locking member (30) securely couples the engagement clips (160) to the ridge (72) in the locked position (32),
optionally wherein the engagement clips (160) each define a projection (162) on a first side (164) and a channel (166) on an opposing second side (168), and wherein the locking member (30) is disposed within the channels (166) of the engagement clips (160), and/or
optionally wherein the heated base (26) includes an outer housing (130) and an inner housing (132) that defines apertures (144), and wherein the engagement clips (160) extend through the apertures (144) to selectively couple the mixing bowl (28) to the heated base (26).

14. The mixer assembly (10) of claim 12 or claim 13, wherein removal of the mixing bowl (28) from the heated base (26) is prevented in the locked position (32) of the locking member (30).

15. A heated base (26) for a mixing assembly, including:
a housing (130) having an upper rim (140) and a lower bowl (142);
a heating feature (133) disposed within the lower bowl (142) of the housing (130);
an engagement clip (160) operably coupled to the housing (130); and
a locking member (30) operably coupled to the engagement clip (160) and configured to selectively engage the engagement clip (160) in a first position and a second position.
